# EUROPÄISCHE PATENTSCHRIFT

(11) **EP 0 542 215 B1**
(45) Veröffentlichungstag und Bekanntmachung des Hinweises auf die Patenterteilung: **24.07.1996**
(21) Anmeldenummer: 92119265.4
(22) Anmeldetag: 11.11.1992
(51) Int. Cl.: D21H 19/40, D21H 19/46, D21H 17/69, C09D 17/00, C09C 1/28, C09C 1/40, C09C 1/42

(54) **Wässrige Feindispersion eines organophilen Schichtsilikates**
Aqueous dispersion of lamellar silicate
Dispersion aqueuse de silicate stratifié

(30) Priorität: 12.11.1991 DE 4137091
(43) Veröffentlichungstag der Anmeldung: 19.05.1993
(73) Patentinhaber: HOECHST AKTIENGESELLSCHAFT, 65926 Frankfurt am Main (DE)
(72) Erfinder: Horn, Ute, W-9255 Dornburg (DE); Dessauer, Guido, Prof.Dr., W-8132 Tutzing (DE); Küber, Klaus, W-8900 Nürnberg 1 (DE)

(56) Entgegenhaltungen:
- EP-A- 0 192 252
- US-A- 2 833 661

## Beschreibung

In EP-A-0 279 313 wird ein Verfahren beschrieben, bei dem man ausgehend von mindestens einem Pigment und mindestens einem wasserlöslichen oder wasserquellbaren anionische Gruppen enthaltenden Hydrogel ein wäßriges kolloidales System bereitet, und dieses wäßrige System mittels eines quartären, organischen Ammoniumsalzes einer Koazervation unterwirft. Mit Hilfe dieses Verfahrens sollen dispergierte Pigmente koazervativ mit einem, mit der Druckfarbe reagierenden Komplex umhüllt werden, damit die Pigmente besser in Wasser aufgetragen werden können. Nachteilig an diesem Verfahren ist der zwingende Einsatz von Pigmenten, der beim Beschichten von Papier und Karton zu einem hohen Streichauftrag führt. In der noch nicht veröffentlichten deutschen Patentanmeldung P 40 38 886.7 bzw. der ebenfalls noch nicht veröffentlichten EP-A-0 489 422 (veröffentlicht am 10.6.92) mit dem Titel "Wasserhaltige organophile Schichtsilikate" werden Feindispersionen aus organophilen Schichtsilikaten in Toluol beschrieben. Nachteilig an diesen Feindispersionen ist der zwingende Einsatz von organischen Lösungsmitteln, wie Toluol. Vor allem im Hinblick auf die Entsorgung bereitet die Verwendung von organischen Lösungsmitteln zunehmende Schwierigkeiten.

Aufgabe der Erfindung ist somit, eine wäßrige Feindispersion eines organophilen Schichtsilikates anzugeben, welche ohne Zusatz von Pigmenten und organischen Lösungsmitteln für die genannten Zwecke eingesetzt werden kann.

Aufgabe der Erfindung ist es weiterhin, ein Verfahren zur Verfügung zu stellen, mit dem diese Feindispersionen von organophilen Schichtsilikaten in wäßrigem Medium hergestellt werden können.

Gegenstand der Erfindung ist eine wäßrige Feindispersion eines organophilen Schichtsilikates, bestehend aus einem kationenaustauschfähigen Schichtsilikat und einem damit umgesetzten quartären organischen Oniumsalz, die dadurch gekennzeichnet ist, daß sie 3 bis 30 Gew.-%, bezogen auf das organophile Schichtsilikat, Polyvinylalkohol enthält.

Ebenfalls Gegenstand der Erfindung ist ein Verfahren zur Herstellung einer Feindispersion eines organophilen Schichtsilikates in wäßrigem Medium, ausgehend von einem wasserhaltigen Präzipitat aus kationenaustauschfähigem Schichtsilikat und quartären organischem Oniumsalz, das dadurch gekennzeichnet ist, daß das Präzipitat in eine klare wäßrige Lösung eines Polyvinylalkohols bei einer Temperatur von mindestens 50°C eingerührt wird oder das Präzipitat und der Polyvinylalkohol gleichzeitig in das wäßrige Medium bei einer Temperatur von mindestens 50 °C eingerührt werden.

Diese organophilen Schichtsilikate werden nach an sich bekannten Methoden erhalten, wie sie auch in dem Artikel von Prof. Dr. A. Weiss, Angew. Chem. Jhrg. 75, Nr. 2, 113-148 (1963) mit dem Titel "Organische Derivate der glimmerartigen Schichtsilikate" und in dem N.L. Rheologiehandbuch der National Lead Inc. Industries, New York 1983 mit dem Titel "Leitfaden für den Einsatz rheologischer Additive" (Deutsche Übersetzung herausgegeben von der N.L. Kronos Titan GmbH, Leverkusen) beschrieben sind.

Als kationenaustauschfähige Schichtsilikate kommen alle synthetischen oder natürlichen Schichtsilikate in Frage, die bis zu 12 bis 20 Gew.-% an Verunreinigungen in Form anderer Minerale, wie Feldspat enthalten können. Derartige Schichtsilikate sind beispielsweise Montmorillonit, Hectorit, Saponit, Sauconit, Beidellit, Nontronit und bevorzugt Bentonit.

Als quartäre organische Oniumsalze kommen insbesonders in Frage Verbindungen der Formel 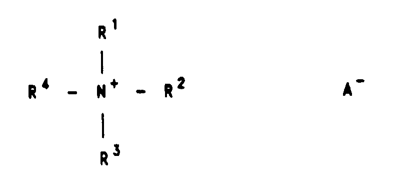 wobei R¹ und R² C₈-C₂₂-Alkyl, C₈-C₂₂-Alkenyl oder Benzyl und R³ und R⁴C₁-C₄-Alkyl und A⁻ ein Anion, bevorzugt Chlorid, bedeuten. Besonders bevorzugt sind die Verbindungen Dimethyldistearylammoniumchlorid und Benzyldimethylstearylammoniumchlorid. Wenn die austauschfähigen Kationen des Schichtsilikats gegen das quartäre organische Oniumion ausgetauscht sind, wird Wasser entfernt. Dies geschieht nach den üblichen Verfahren der Trenntechnik, z.B. durch Filtration oder Abpressen. Das nach dem Abtrennen von Wasser anfallende Präzipitat besteht zu ca. 70 bis 80 Gew.-% aus Wasser. Unter dem Begriff Präzipitat wird das organophile Schichtsilikat nach dem Abtrennen des Wassers verstanden.
Bei dem erfindungsgemäßen Verfahren kann das Präzipitat direkt zur Herstellung der Feindispersion eingesetzt werden.

Zur Herstellung der erfindungsgemäßen Feindispersion werden neben dem Präzipitat auch Polyvinylalkohole eingesetzt.
Die verwendeten Polyvinylalkohole besitzen vorteilhafterweise ein mittleres Molekulargewicht zwischen 40 000 und 250 000. Besonders geeignet sind handelsübliche Produkte wie ®Mowiol 10/98, ®Mowiol 28/99 und ®Mowiol 56/98 (Hoechst AG). Es werden vollverseifte oder auch teilverseifte Polyvinylalkohole verwendet. Für die Verwendung in Streichmassen werden vorzugsweise vollverseifte Verbindungen eingesetzt.

Bei dem erfindungsgemäßen Verfahren wird der Polyvinylalkohol unter Rühren in ein gegebenenfalls erwärmtes wäßriges Medium eingebracht und die Mischung bei einer Temperatur im Bereich oberhalb vorzugsweise 50°C und dem Siedepunkt der Mischung so lange gerührt bis der Polyvinylalkohol vollständig gelöst ist und eine klare Lösung entstanden ist. Die Temperatur des gegebenenfalls erwärmten wäßrigen Mediums liegt zwischen ungefähr 20°C und dem Siedepunkt des wäßrigen Mediums. Bevorzugt wird der Polyvinylalkohol in ein wäßriges Medium mit einer Temperatur im Bereich zwischen 90°C und 98°C unter Rühren eingebracht und die Mischung bei einer Temperatur zwischen 90°C und 98°C so lange gerührt, bis der Polyvinylalkohol vollständig gelöst ist und eine klare Lösung entstanden ist. Weitere geeignete Bestandteile des wäßrigen Mediums sind wassermischbare Flüssigkeiten. Das wäßrige Medium besteht bevorzugt aus Wasser ohne Zusatz an wassermischbaren Flüssigkeiten.
Ebenfalls unter Rühren wird in die klare Lösung das Präzipitat eingebracht, wobei darauf zu achten ist, daß die Temperatur der Dispersion in dem vorstehend genannten Temperaturbereich liegt. Es ist besonders vorteilhaft, wenn das Rühren unter hohen Scherkräften erfolgt. Die Zugabe des Präzipitates zur Polyvinylalkohollösung erfolgt nach an sich bekannten Methoden. Der Schervorgang dauert so lange an, bis die gewünschte Feindispersität erreicht ist (Verfahren A).

Es ist ebenfalls möglich, Polyvinylalkohol und Präzipitat gleichzeitig in ein gegebenfalls erwärmtes wäßriges Medium unter Rühren, vorzugsweise mit hohen Scherkräften, einzubringen und so lange zu rühren, bis die gewünschte Feindispersität erreicht ist (Verfahren B). Das gleichzeitige Einbringen von Polyvinylalkohol und Präzipitat in das gegebenenfalls erwärmte wäßrige Medium erfolgt nach bekannten Methoden, im einfachsten Fall durch bloße Zugabe.

Unabhängig von der Art und Weise der Zugabe des Präzipitates erfolgt das Dispergieren des Präzipitates bei einer Temperatur zwischen 50°C und dem Siedepunkt der Dispersion, bevorzugt zwischen 90 und 98°C.
Das Dispergieren des Präzipitates erfolgt nach an sich bekannten Methoden. Je nach der Korngröße der vorliegenden Teilchen ist es angebracht, das Dispergieren des Präzipitates in der Lösung zunächst mit einem normalen Flügelrührer durchzuführen und anschließend die Feindispergierung durchzuführen. Das Feindispergieren des Präzipitates erfolgt mit geeigneten Vorrichtungen, wie einem "Caddy-Mill"-Rührer, einer Kolloidmühle oder dem Ultraturrax (Hersteller: Jahnke und Kunkel). In den erfindungsgemäßen Feindispersionen liegen die organophilen Schichtsilikate in einer mittleren Korngröße von unterhalb 20 µm, bevorzugt zwischen 10 und 3 µm vor.

Die Einhaltung des geforderten Temperaturbereiches zwischen 90 und 98°C und das Rühren unter hohen Scherkräften führen zu den besten Resultaten hinsichtlich der Feindispersität und der Verwendung als Beschichtungsmittel für Papier und Karton.

Die erfindungsgemäßen Feindispersionen besitzen in der Regel einen Gehalt an organophilen Schichtsilikaten im Bereich von 3 bis 20 Gew.-%, bevorzugt zwischen 3 und 17, besonders bevorzugt zwischen 3 und 10 Gew.-%, bezogen auf das Gesamtgewicht der Feindispersion. Der Gehalt an Polvvinylalkohol der wäßrigen Feindispersion liegt zwischen 3 und 30 Gew.-%, bevorzugt zwischen 12 und 17 Gew.-%, bezogen auf das organophile Schichtsilikat.

Die erfindungsgemäßen Feindispersionen können direkt zum Beschichten von Papier und Karton eingesetzt werden, wobei es empfehlenswert ist, die hergestellten Feindispersionen durch bekannte Maßnahmen zu konservieren. Die Konservierung kann durch Zugabe geeigneter Desinfektionsmittel, wie Wasserstoffperoxid oder quartären Ammoniumsalzen mit bakteriziden Eigenschaften erfolgen. Den erfindungsgemäßen Feindispersionen können vor dem Beschichten dem Fachmann bekannte optische Aufheller zugesetzt werden, um den in wäßrigen Strichen auftretenden Gelbstich zu unterdrücken.

Die erfindungsgemäßen Feindispersionen besitzen auch eine hohe Stabilität und Lagerfähigkeit und sind zur Herstellung von Streichmassen für Papier und Karton, die ebenfalls eine gute Stabilität und Lagerfähigkeit besitzen, geeignet.

Die erfindungsgemäßen Feindispersionen eignen sich sowohl zum einseitigen als auch zum beidseitigen Beschichten von Papier und Karton. Sie eignen sich zum Beschichten aller Arten von Papieren, wie sie beim Tiefdruck, Rollenoffsetdruck, Bogenoffsetdruck und Hochdruck benötigt werden. Besonders geeignet sind sie zum Beschichten von Papier mit geringem Gewicht, wie LWC- oder LLWC-Papieren. Das Beschichten erfolgt mit Hilfe geeigneter Vorrichtungen, wie Luftbürsten-Streichmaschinen, "Gravur-Coater", "Blade Coater" oder Leimpressen, wobei nach bekannten Verfahren gearbeitet wird.

Aus wirtschaftlichen Gründen ist man bestrebt, bei Druckerzeugnissen mit hoher Auflage, beispielsweise bei Zeitschriften oder Versandkatalogen, Dünndruckpapiere zu verwenden. Hierbei ergeben sich aber Probleme hinsichtlich der Opazität, d.h. es kommt beim Drucken zu einem störenden Durchscheinen des Druckes auf die andere Seite des Papiers. Zur Verhinderung dieses Effektes werden die nach dem erfindungsgemäßen Verfahren hergestellten wäßrigen Feindispersionen auf das Papier aufgetragen. Je nach Wahl des Auftragsystems und der gewählten Papiersorte wird die wäßrige Feindispersion zu geringeren Feststoffgehalten verdünnt. So hat es sich gezeigt, daß es von Vorteil ist, bei der Verwendung von Leimpressen und "Speed-Sizer" (System Voith Heidenheim) oder "Metering Size Press"-System, die Feindispersion auf einen Feststoffgehalt im Bereich zwischen 7 und 9 Gew.-%, bezogen auf das Gesamtgewicht der Feindispersion einzustellen. Es hat sich gezeigt, daß die Feindispersionen auch als Zusatz für pigmentierte Streichmassen konventioneller Art in einer Größenordnung von 0,3 bis 3 Gew.-%, bezogen auf den Gesamttrockengehalt, verwendet werden können, wobei sie im Austausch für das als Gleitmittel verwendete Calciumstearat eingesetzt werden.

Neben dem Verdünnen der Feindispersionen besteht auch die Möglichkeit, die Feindispersionen durch geeignete Maßnahmen, wie Vakuumdestillation aufzukonzentrieren und in dieser konzentrierten Form zum Beschichten von Papier und Karton zu verwenden. Die durch Aufkonzentrieren hergestellten erfindungsgemäßen Feindispersionen besitzen vorzugsweise einen Gehalt an organophilen Schichtsilikaten im Bereich von 20 bis 50 Gew.-%, bezogen auf das Gesamtgewicht. Es hat sich gezeigt, daß diese aufkonzentrierten Feindispersionen auch als Zusatz für pigmentierte Streichmassen konventioneller Art in einer Größenordnung von 0,3 bis 5 Gew.-%, bezogen auf den Gesamttrockengehalt verwendet werden können, wobei sie im Austausch für das als Gleitmittel verwendete Calciumstearat eingesetzt werden.

Die mit den erfindungsgemäßen Feindispersionen bestrichenen Papiere und Kartons werden in einem anschließenden Arbeitsgang nachsatiniert, wobei die Satinage bevorzugt mit gekühlten Walzen erfolgt.

Vorteile des erfindungsgemäßen Verfahrens bestehen darin, daß zur Herstellung der wäßrigen Feindispersionen auf die bisher übliche Verwendung von Pigmenten verzichtet werden kann und es damit ermöglicht wird, die Strichauftragsmenge der wäßrigen Feindispersionen sehr gering zu halten. Bei den erfindungsgemäßen Feindispersionen liegt die Strichauftragsmenge vorzugsweise in einem Bereich von 1,0 bis 1,6 g/m² auf jeder Seite.
Die Vorteile, die mit den erfindungsgemäßen Feindispersionen auf Druckgegenständen erzielt werden, lassen sich wiefolgt darstellen: volle Toluoldichte, Reduzierung des Durchschlagens und Durchscheines der Druckfarbe, Erhöhung des Farbstandes und der Farbtiefe, Verbesserung der Farbannahme, Anstieg des Druckglanzes und Reduzierung der "missing-dots".
Beim Karton, der oftmals nach dem Bedrucken überlackiert wird, verringert sich durch die Beschichtung mit dem erfindungsgemäßen Mittel der Lackverbrauch.

Aufgrund ihrer oleophilen Oberflächeneigenschaften lassen sich die erfindungsgemäßen Feindispersionen bevorzugt beim Tiefdruck und Rollenoffset-Druck einsetzen.

### Allgemeine Vorschrift zur Herstellung der Feindispersion

### Verfahren A

Der Polyvinylalkohol wird in die errechnete Menge wäßrigen Mediums unter Rühren mit einem Flügelrührer eingestreut. Danach wird die Mischung auf 95°C erhitzt und solange gerührt, bis eine stippenfreie klare Lösung vorliegt. Dieser klaren Lösung wird das Präzipitat sukzessive unter Rühren zugesetzt. Anschließend wird unter starkem Scheren mit dem Ultraturrax (Hersteller: Jahnke und Kunkel) bis zum Erhalt einer kolloidalen Feindispersion homogenisiert. Die Feindispersität wird mit dem Malvern 2600 C (Hersteller: Malvern, England; Typ: Laserlichtbeugungsgerät) bestimmt.

### Verfahren B

Polyvinylalkohol und Präzipitat werden gemeinsam in das vorgelegte wäßrige Medium unter Rühren eingetragen. Danach wird die Dispersion, wie in Verfahren A beschrieben, geschert, bis eine kolloidale Dispersion vorliegt. Die Feindispersität wird wie in Verfahren A bestimmt.

| Beispiel | 1 | 2 | 3 | 4 | 5 |
|---|---|---|---|---|---|
| Verfahren | A | B | A | B | A |
| Mengen in g | | | | | |
| Präzipitat^{^{*)}} | 528.0 | 490.0 | 453.0 | 415.0 | 377.0 |
| ®Mowiol 28/99 | 14.0 | | 17.0 | | 18.0 |
| ®Mowiol 56/98 | | 15.5 | | 17.5 | |
| H₂O₂ (10 gew.-%ig) | 2.0 | 2.0 | 2.0 | 2.0 | 2.0 |
| Wasser | 456.0 | 492.5 | 528.0 | 528.0 | 603.0 |
| mittlere Korngröße ^{^{**)}} in µm | 19 | 18 | 16 | 14 | 11,3 |

| | | | | | |
|---|---|---|---|---|---|
| ^{*)} Feststoffgehalt 26 Gew.-% | | | | | |
| ^{**)} die mittlere Korngröße wird auf den D₅₀-Wert der Volumenverteilung bezogen und wird mit dem ®Malvern 2600 C (Hersteller: Malvern, England; Typ: Laserlichtbeugungsgerät) bestimmt. | | | | | |

### Beschichtung und Probedruck

Mit den Feindispersionen der Beispiele 1 bis 5 wird ein SC-Papier (ca. 10 Gew.-% Zellstoff, ca 21 Gew.-% Füllstoff) beschichtet. Das Beschichten erfolgt mit Hilfe eines "Gravur-Coaters" ("Multi-Coater" mit gegenläufiger Gravurwalze, Aufnahme an Beschichtungsmasse: 33,2 ml/m²). Das Trägerpapier wird beidseitig beschichtet. An das Auftragswerk schließt sich unmittelbar die Trocknung des beschichteten Papiers an. Vor dem Probedruck wird das Papier satiniert.

Mit den Beschichtungsmassen werden beim Probendruck folgende Ergebnisse erzielt:

| Beispiel | 1 | 2 | 3 | 4 | 5 |
|---|---|---|---|---|---|
| Auftragsmenge in g/m² und Seite | 1,6 | 1,6 | 1,6 | 1,6 | 1,6 |
| Rupffestigkeit | gut | gut | gut | gut | sehr gut |
| Opazität | gut | gut | gut | gut | sehr gut |
| Holdout | gut | gut | gut | gut | sehr gut |
| Farbstand | gut | gut | gut | gut | sehr gut |

Insbesondere Beispiel 5 zeigt, daß auch bei geringem Präzipitatgehalt der Feindispersion hervorragende Werte hinsichtlich der verbesserten Bedruckbarkeit, insbesondere hinsichtlich der absoluten Dichtigkeit gegenüber Toluol, erzielt werden.

## Patentansprüche

1. Wäßrige Feindispersion eines organophilen Schichtsilikates, bestehend aus einem kationenaustauschfähigen Schichtsilikat und einem damit umgesetzten quartären organischen Oniumsalz, dadurch gekennzeichnet, daß sie 3 bis 30 Gew.-%, bezogen auf das organophile Schichtsilikat, Polyvinylalkohol enthält.

2. Wäßrige Feindispersion nach Anspruch 1, dadurch gekennzeichnet, daß das kationenaustauschfähige Schichtsilikat aus Montmorillonit, Hectorit, Saponit, Sauconit, Beidellit, Nontronit und/oder Bentonit, insbesondere aus Bentonit, besteht.

3. Wäßrige Feindispersion nach Anspruch 1 oder 2, dadurch gekennzeichnet, daß das quartäre organische Oniumsalz aus Verbindungen der Formel (NR¹R²R³R⁴)⁺ A⁻ besteht, in denen
R¹ und R² C₈-C₂₂-Alkyl, C₈-C₂₂-Alkenyl oder Benzyl,
R³ und R⁴ C₁-C₄-Alkyl und
A⁻ ein Anion bedeuten.

4. Wäßrige Feindispersion nach einem der Ansprüche 1 bis 3, dadurch gekennzeichnet, daß der Polyvinylalkohol ein mittleres Molekulargewicht von 40 000 bis 250 000 aufweist.

5. Wäßrige Feindispersion nach einem der Ansprüche 1 bis 4, dadurch gekennzeichnet, daß sie 3 bis 20 Gew.-%, bezogen auf das Gesamtgewicht, organophiles Schichtsilikat enthält.

6. Wäßrige Feindispersion nach einem der Ansprüche 1 bis 5, dadurch gekennzeichnet, daß die mittlere Korngröße des organophilen Schichtsilikates kleiner als 20 µm ist.

7. Verfahren zur Herstellung einer Feindispersion eines organophilen Schichtsilikates in wäßrigem Medium, ausgehend von einem wasserhaltigen Präzipitat aus kationenaustauschfähigem Schichtsilikat und quartären organischem Oniumsalz, dadurch gekennzeichnet, daß das Präzipitat in eine klare wäßrige Lösung eines Polyvinylalkohols bei einer Temperatur von mindestens 50°C eingerührt wird oder das Präzipitat und der Polyvinylalkohol gleichzeitig in das wäßrige Medium bei einer Temperatur von mindestens 50 °C eingerührt werden.

8. Papier oder Karton, einseitig oder beidseitig bestrichen mit der wäßrigen Feindispersion nach einem der Ansprüche 1 bis 6.

9. Papier oder Karton nach Anspruch 8, dadurch gekennzeichnet, daß die Auftragsmenge gleich/kleiner als 2 g/m² ist.

10. Streichmasse für Papier oder Karton, enthaltend eine wäßrige Feindispersion nach einem der Ansprüche 1 bis 6.

11. Gleitmittelzusatz für konventionelle Streichmassen, enthaltend eine wäßrige Feindispersion nach einem der Ansprüche 1 bis 6.

## Claims

1. An aqueous fine dispersion of an organophilic sheet silicate, composed of a sheet silicate which is capable of cation exchange and of a quaternary organic onium salt reacted therewith, which dispersion contains 3 to 30% by weight, based on the organophilic sheet silicate, of polyvinyl alcohol.

2. An aqueous fine dispersion as claimed in claim 1, wherein the sheet silicate which is capable of cation exchange is composed of montmorillonite, hectorite, saponite, sauconite, beidellite, non-tronite and/or bentonite, especially of bentonite.

3. An aqueous fine dispersion as claimed in claim 1 or 2, wherein the quaternary organic onium salt is composed of compounds of the formula (NR¹R²R³R⁴)⁺ A⁻ in which R¹ and R² are C₈-C₂₂-alkyl, C₈-C₂₂-alkenyl or benzyl, R³ and R⁴ are C₁-C₄-alkyl and A⁻ is an anion.

4. An aqueous fine dispersion as claimed in any of claims 1 to 3, wherein the polyvinyl alcohol has an average molecular weight of 40 000 to 250 000.

5. An aqueous fine dispersion as claimed in any of claims 1 to 4, which contains 3 to 20% by weight, based on the total weight, of organophilic sheet silicate.

6. An aqueous fine dispersion as claimed in any of claims 1 to 5, wherein the average grain size of the organophilic sheet silicate is below 20 µm.

7. A process for the preparation of a fine dispersion of an organophilic sheet silicate in aqueous medium, starting from a water-containing precipitate of sheet silicate which is capable of cation exchange and of quaternary organic onium salt, which comprises stirring the precipitate into a clear aqueous solution of a polyvinyl alcohol at a temperature of at least 50°C, or stirring the precipitate and the polyvinyl alcohol simultaneously into the aqueous medium at a temperature of at least 50°C.

8. Paper or board coated on one side or both sides with the aqueous fine dispersion as claimed in any of claims 1 to 6.

9. Paper or board as claimed in claim 8, wherein the coating weight is equal to or less than 2 g/m².

10. A coating composition for paper or board, containing an aqueous fine dispersion as claimed in any of claims 1 to 6.

11. A lubricant additive for conventional coating compositions, containing an aqueous fine dispersion as claimed in any of claims 1 to 6.

## Revendications

1. Dispersion fine aqueuse d'un phyllosilicate organique, constituée d'un phyllosilicate ayant un pouvoir d'échange de cations et d'un sel onium organique quaternaire ayant réagi avec ce dernier, caractérisée en ce qu'elle contient de 3 à 30 % en poids, par rapport au phyllosilicate organophile, d'un poly(alcool vinylique).

2. Dispersion fine aqueuse selon la revendication 1, caractérisée en ce que le phyllosilicate ayant un pouvoir d'échange de cations est constitué de montmorillonite, d'hectorite, de saponite, de sauconite, de beidellite, de nontronite et/ou de bentonite, notamment de bentonite.

3. Dispersion fine aqueuse selon la revendication 1 ou 2, caractérisée en ce que le sel onium organique quaternaire est constitué de composés de formule (NR¹R²R³R⁴)⁺ A⁻, où :
R¹ et R² sont des groupes alkyle en C₈-C₂₂, alcényle en C₈-C₂₂ ou benzyle,
R³ et R⁴ sont des groupes alkyle en C₁-C₄, et
A⁻ est un anion.

4. Dispersion fine aqueuse selon l'une des revendications 1 à 3, caractérisée en ce que le poly(alcool vinylique) a une masse moléculaire moyenne de 40 000 à 250 000.

5. Dispersion fine aqueuse selon l'une des revendications 1 à 4, caractérisée en ce qu'elle contient de 3 à 20 % en poids, par rapport au poids total, d'un phyllosilicate organophile.

6. Dispersion fine aqueuse selon l'une des revendications 1 à 5, caractérisée en ce que la granulométrie moyenne du phyllosilicate organophile est inférieure à 20 µm.

7. Procédé pour préparer une dispersion fine d'un phyllosilicate organophile en milieu aqueux, à partir d'un précipité, contenant de l'eau, d'un phyllosilicate présentant un pouvoir d'échange de cations et d'un sel onium organique quaternaire, caractérisé en ce que le précipité est délayé dans une solution aqueuse limpide d'un poly(alcool vinylique) à une température d'au moins 50°C, ou encore que le précipité et le poly(alcool vinylique) sont simultanément délayés dans le milieu aqueux, à une température d'au moins 50°C.

8. Papier ou carton, couché sur une face ou sur les deux faces, d'une dispersion fine aqueuse selon l'une des revendications 1 à 6.

9. Papier ou carton selon la revendication 8, caractérisé en ce que la quantité appliquée est inférieure ou égale à 2 g/m².

10. Composition de couchage pour le papier ou le carton, contenant une dispersion fine aqueuse selon l'une des revendications 1 à 6.

11. Additif lubrifiant pour compositions de couchage classiques, contenant une dispersion fine aqueuse selon l'une des revendications 1 à 6.
